**Europäisches Patentamt**

**European Patent Office**

**Office européen des brevets**

(19)

(11) Veröffentlichungsnummer : **0 401 407 B1**

(12)

# EUROPÄISCHE PATENTSCHRIFT

(45) Veröffentlichungstag der Patentschrift :
**26.02.92 Patentblatt 92/09**

(51) Int. Cl.⁵ : **B65B 3/32, G01F 11/02**

(21) Anmeldenummer : **89110339.2**

(22) Anmeldetag : **08.06.89**

(54) **Füllpumpe zum Eindosieren von flüssigen bis pastösen Produkten.**

(43) Veröffentlichungstag der Anmeldung :
**12.12.90 Patentblatt 90/50**

(45) Bekanntmachung des Hinweises auf die
Patenterteilung :
**26.02.92 Patentblatt 92/09**

(84) Benannte Vertragsstaaten :
**CH FR GB IT LI**

(56) Entgegenhaltungen :
**EP-A- 0 029 634**
**DE-U- 8 808 360**
**FR-A- 587 215**

(73) Patentinhaber : **Hassia**
**Verpackungsmaschinen GmbH**
**Heegweg Postfach 1120**
**W-6479 Ranstadt 1 (DE)**

(72) Erfinder : **Walter, Kurt**
**Königsberger Strasse 8-10**
**W-6475 Glauburg (DE)**

(74) Vertreter : **Wolf, Günter, Dipl.-Ing.**
**Postfach 70 02 45 An der Mainbrücke 16**
**W-6450 Hanau 7 (DE)**

EP 0 401 407 B1

Jouve, 18, rue Saint-Denis, 75001 PARIS

## Beschreibung

Die Erfindung betrifft eine Füllpumpe zum Eindosieren von flüssigen bis pastösen Produkten gemäß Oberbegriff des Hauptanspruches.

Eine Füllpumpe dieser Art ist nach der DE-OS 35 43 504 bekannt. Abgesehen von dieser speziellen Füllpumpe erfolgt das Eindosieren in der Regel für jeweils in einer Reihe der am Strang ausgebildeten und zur Füllstation zugeförderten Aufnahmebehälter, wonach dann der ganze aus der Füllstation auslaufende und gefüllte Strang mit einer Deckfolie versiegelt und die Aufnahmebehälter vereinzelt werden. Die Anordnung und Ausbildung einer entsprechenden Reihe von Kolbendosierpumpen in der Füllstation ist dabei unproblematisch und zwar auch dann noch, wenn zwei hintereinander in der Füllstation befindliche Aufnahmebehälter gefüllt werden sollen, da dann noch ausreichend Platz für die Unterbringung für die Kolbendosierpumpen vorhanden ist. Die Anordnung der Kolbendosierpumpen wird jedoch dann problematisch, wenn ein ganzes Napffeld, bestehend aus bspw. fünfunddreißig Näpfchen gefüllt werden soll, das aus 5 x 7 neben- und hintereinander angeordneten Reihen von Aufnahmebehältern besteht, und zwar insbesondere dann, wenn die Aufnahmebehälter relativ kleine Abmessungen haben. Mit der Füllpumpe nach der genannten DE-OS 35 43 504 ist diese Problematik dadurch gelöst, daß jedem Füllmundstück eine Kolbendosierpumpe zugeordnet ist, welche Füllpumpen im gleichen Raster wie die darunter befindlichen Aufnahmebehälter eines Napffeldes in der Füllstation angeordnet sind. Dabei befindet sich zwischen jeder Kolbendosierpumpe und dem zugehörigen Füllmundstück ein Schließ- und Öffnungsventil, wobei diese aber für eine Kolbendosierpumpenreihe in einem die ganze Reihe erfassenden Drehschieber untergebracht sind, der sich unmittelbar zwischen den Kolbendosierpumpenausgängen und den Füllmundstücken befindet.

Will man nun aus Gründen der Ersparnis von Verpackungsmaterial die Näpfchenanordnung im Napffeld noch weiter verdichten, so ist dies nur möglich, wenn man die Näpfchenreihen zueinander auf Lücke versetzt, wodurch die Mittellinien zweier benachbarter Näpfchenreihen weiter zusammengerückt werden können. Ein solches "verdichtetes" Napffeld weist dann im Vergleich zum vorerwähnten Beispiel bei gleicher Feldgröße nicht mehr fünfunddreißig sondern vierzig Näpfchen auf. Von der Pumpenseite her gesehen wäre es zwar einerseits möglich, die in der Regel in einem Block befindlichen Pumpenzylinder zu einem entsprechend dichten Verband zusammenzurücken, andererseits ist es aber dann nicht mehr ohne weiteres möglich, die Übergänge von den Ausmündungen der Pumpenzylinder zu den Füllmundstücken konstruktiv bei vertretbarem Fertigungsaufwand unterzubringen, zumal im Übergang auch noch die Ventile vorgesehen werden müssen, für die sich die bekannten Drehschieber am besten eignen. Bei einem mit Lückenversatz ausgebildeten Näpfchenfeld wird es, vom verfügbaren Raum unter den Pumpenreihen her gesehen, schon so eng, daß jeweils eine ganze Reihe erfassende Drehschieber konstruktiv praktisch nicht mehr vorgesehen werden können.

Der Erfindung liegt demgemäß die Aufgabe zugrunde, eine Füllpumpe der eingangs genannten Art dahingehend zu verbessern, daß, bezogen auf die Anzahl der dicht aneinandergerückten und auf Lücke versetzten Füllmundstücksreihen, diese mit der jeweils halben Anzahl von Füllpumpenreihen unter Verwendung von Drehschiebern mit dem jeweiligen Füllgut beschickt und damit die entsprechend dicht und auf Lücke zusammengerückten Näpfchen eines ganzen Napffeldes gleichzeitig gefüllt werden können.

Diese Aufgabe ist mit einer Füllpumpe der eingangs genannten Art nach der Erfindung durch die im Kennzeichen des Hauptanspruches angeführten Merkmale gelöst. Vorteilhafte Weiterbildungen ergeben sich nach den Unteransprüchen.

Diese erfindungsgemäße Lösung nutzt die zunächst erschwerend erscheinende Gegebenheit des Lückenversatzes der in einer Reihe befindlichen Näpfchen zu den Näpfchen der beiden benachbarten Reihen aus, indem für zwei benachbarte Reihen nur ein Drehschieber vorgesehen wird, über den die Füllmundstücke der beiden betreffenden Reihen beschickt werden. Da für zwei Reihen nur ein Drehschieber vorgesehen werden muß, ist auch genügend Raum im Ventilblock vorhanden, um diesen konstruktiv bequem unterbringen zu können, d.h., natürlich nicht nur diesen einen Drehschieber, sondern je nach Anzahl der im ganzen Napffeld vorhandenen Reihen mehrere Drehschieber. Der Lückenversatz ist auch insofern ausgenützt, als damit die Masseführungskanäle im Drehschieber entsprechend verteilt angeordnet werden können, obgleich über die Masseführungskanäle in einem Drehschieber zwei Näpfchenreihen beschickt werden. Die Anordnung der darüber befindlichen einzelnen Füllpumpen entspricht dabei nicht dem Versatzraster der Näpfchen bzw. der Füllmundstücke, sondern die Pumpen sind dabei nach wie vor in den Kreuzungspunkten eines rechtwinkligen Rasters angeordnet. Die Pumpen einer Reihe beschicken dabei, wie vorerwähnt, jedoch die zueinander versetzten Näpfchen zweier benachbarter Näpfchenreihen, was im einzelnen noch näher erläutert wird.

Da man aufgrund der in bezug auf die Anzahl der Füllmundstücksreihen mit nur der halben Anzahl von Drehschiebern auskommt, ist in deren Bereich trotz der dicht versetzten Anordnung der Näpfchen im Napffeld bzw. der entsprechenden Anordnung der Füllmundstücke noch ausreichend Platz zwischen den Drehschiebern für eine vorteilhafte Weiterbildung dahingehend gewonnen, daß auch bei der vorliegenden erfindungsgemäßen Füllpumpe die noch genauer zu erläuternde Massezufuhr im Bereich der Drehschieber mit untergebracht werden kann. Abgesehen davon ist es bei geeigneter und entsprechender "innerer" Gestaltung der Füllpumpen möglich, die Massezufuhr auch auf anderem Wege, bzw. auf andere Weise zu bewirken.

Die erfindungsgemäße Füllpumpe wird nachfolgend anhand der zeichnerischen Darstellung eines Ausführungsbeispieles näher erläutert.

Es zeigt schematisch

Fig. 1 einen Schnitt durch eine Ausführungsform der Füllpumpe längs der Förderrichtung A des im Takt durchlaufenden Folienstranges;

Fig. 1A, B Schnitte durch die Drehschieber in Füllstellung;

Fig. 2 einen Schnitt längs Linie A-B in Fig. 1 und

Fig. 3 eine Draufsicht auf Fig. 1 mit angedeuteter versetzter Näpfchenanordnung eines insgesamt zu füllenden Napffeldes.

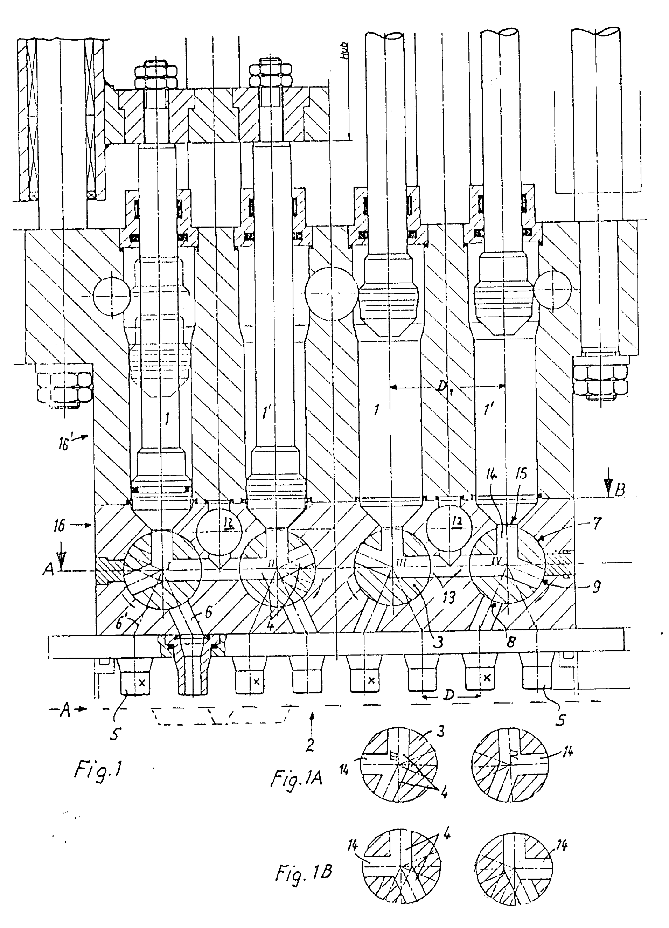

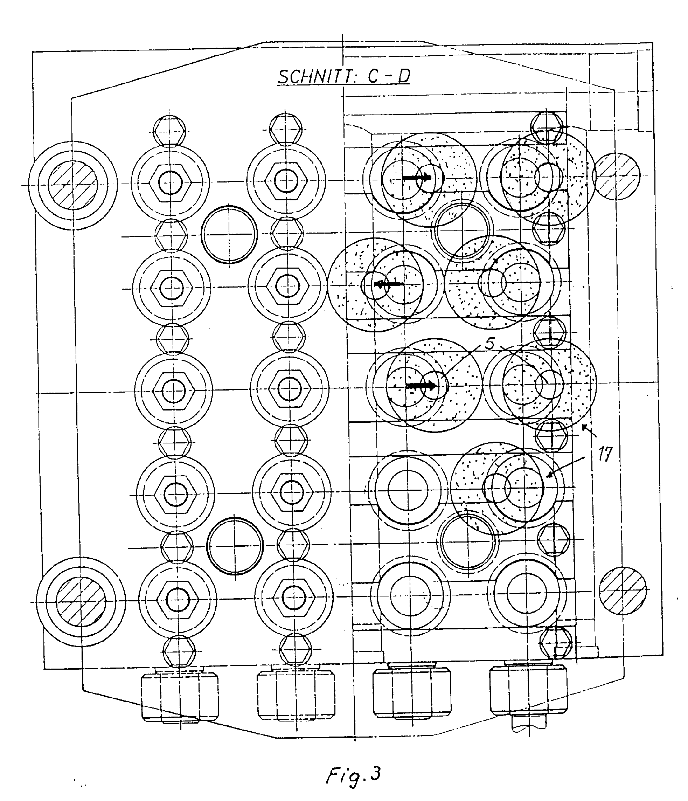

Gemäß Ausführungsbeispiel in Fig. 1, in der die Antriebe für die Bewegung der Pumpenkolben und auch für die Drehschieber nicht dargestellt sind, besteht die Füllpumpe aus mehreren, der Napfanzahl im Napffeld entsprechenden, in Reihe neben- und hintereinander angeordneten, gemeinsam antreibbaren Kolbendosierpumpen 11 mit Schließ- und Öffnungsmechanik in Form eines unter den Kolbendosierpumpen 11 angeordneten Ventilblockes 16, in dem mit einem gemeinsamen Antrieb im Takt drehbare Drehschieber 3 mit Massezuführungskanälen 4 angeordnet und diesen jeweils Füllmundstücke 5 für die zu füllenden Aufnahmebehälter 17 zugeordnet sind. Bezüglich der Versatzanordnung der Näpfchen bzw. Aufnahmebehälter 17 zueinander innerhalb eines insgesamt zu füllenden Napffeldes wird auf Fig. 3 verwiesen, wobei in diesem Ausführungsbeispiel in einem Napffeld zwanzig Näpfchen und an der Füllpumpe insgesamt entsprechend zwanzig Füllmundstücke 5 vorgesehen sind. Bezüglich der dargestellten Füllmundstücke 5 in Fig. 1 ist darauf hinzuweisen, daß die mit Kreuzen markierten Füllmundstücke 5 mit den nicht markierten Füllmundstücken nicht in einer Reihe liegen, sondern die unter der Zeichnungsebene verlaufende Reihe von Füllmundstücken 5 darstellen.

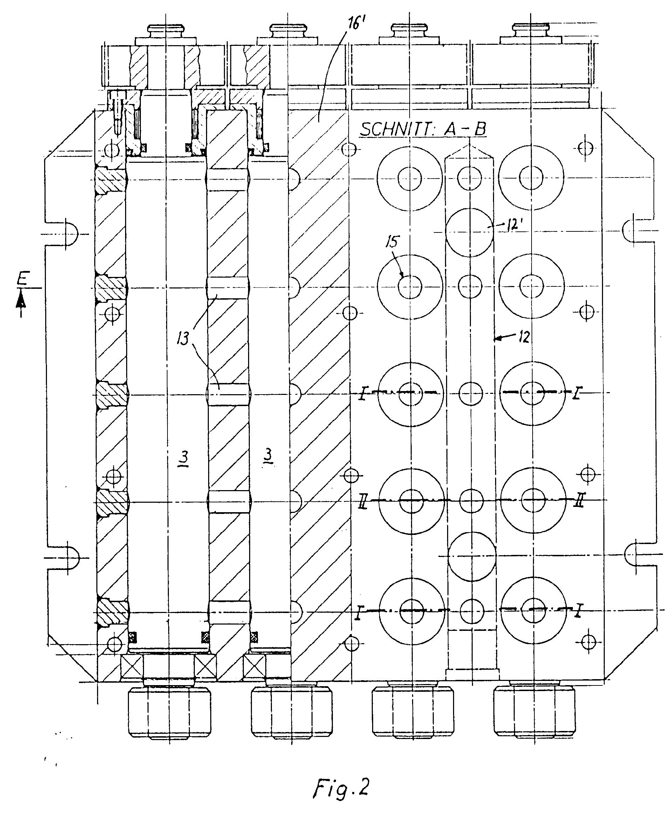

Wie aus Fig. 1 ersichtlich, ist unter jeder sich quer zur Napffelddurchlaufrichtung A angeordneten Pumpenreihe 1, 1′ ein Drehschieber 3 mit seinen Massedurchlaufkanälen 4 angeordnet. Die Pumpenreihen 1, 1′ sind untereinander mit zur Distanz D der Füllmundstückreihen 2 doppelter Distanz angeordnet. Die Füllmundstücke 5 zweier Reihen 2 stehen über Zwischenkanäle 6, 6′ mit der Zylinderbohrung 7 jedes Drehschiebers 3 in Verbindung und zwar jeweils in entgegengesetzten Richtungen, wie dies mit den dick in Fig. 3 eingezeichneten Pfeilen verdeutlicht ist. Die Anschlußmündungen 8 der Zwischenkanäle 6, 6′ sind dabei jeweils im Stellbereich der Ausmündungen 9 der Massedurchlaßkanäle 4 des Drehschiebers 3 angeordnet. Auf diese Weise ist es möglich, mit jedem der Drehschieber 3 jeweils zwei sich quer zur Durchförderrichtung A erstreckenden Reihen von Näpfchen zu füllen. Die beiden links in Fig. 1 dargestellten Pumpen 11 und die zugehörigen Drehschieber 3 befinden sich dabei in Ansaugstellung, während die beiden rechts dargestellten Pumpen 11 mit ihren Drehschiebern sich in Reinigungsstellung befinden, die keiner näheren Erläuterung bedarf, da die dafür notwendigen Ausbildungen (kopfseitige Zylindererweiterung) und Maßnahmen bekannt sind. Die in Fig. 1A dargestellten Schnitte der Drehschieber entsprechen dabei der Füllstellung für Näpfchen, die sich in Förderrichtung hintereinander in ei ner Reihe befinden. Gleiches gilt für die Schnittdarstellungen der Drehschieber in Fig. 1B, dies gilt jedoch für die benachbarte Reihe, die sich in Förderrichtung erstreckt. Zwecks diesbezüglicher Vereutlichung wird auf die Schnittlinien I-I bzw. II-II in Fig. 2 verwiesen, d.h., die Stellung der Drehschieber 3 gemäß Fig. 1 entspricht einem Schnitt am Drehschieber längs Linie I-I und die Stellung gemäß Fig. 1B entspricht einem Schnitt II-II.

Wie dargestellt und bevorzugt ausgeführt, sind die Füllmundstücksreihen 2, die sich quer zur Förderrichtung erstrecken, paarweise, also jeweils symmetrisch zur mittelsenkrechten Schnittebene 10 des zugehörigen Drehschiebers aneordnet, wobei die Zwischenkanäle 6, 6′ der beiden Füllmundstückreihen 2 mit gleicher aber entgegengesetzter Neigung zur Zylinderbohrung 7 des Drehschiebers 3 geführt sind. In Rücksicht auf diese Neigungsanordnung der Zwischenkanäle 6, 6′, die nicht zwingend aber in Rücksicht auf die Fertigung eines solchen Ventilblockes am einfachsten zu verwirklichen ist, sind die Massedurchlaßkanäle 4 im Drehschieber 3 zwischenkanalseitig entsprechend der Neigung der Zwischenkanäle 6, 6′ abgewinkelt zum füllpumpenseitigen Teil der Massedurchlaßkanäle 4 angeordnet.

Da durch diese Ausbildung der Drehschieber 3 mit jeweils einem Drehschieber gleichzeitig zwei sich quer zur Förderrichtung A erstreckende Füllmundstückreihen 2 beschickt werden können, ergibt sich trotz der "verdichteten" Anordnung der Füllmundstücke 5 gemäß der entsprechend "verdichteten" Anordnung der Näpfchen im Näpfchenfeld ausreichend Raum im Ventilblock 16 für die Unterbringung der Drehschieber, wie in Fig. 1, 2 dargestellt. Vorteilhaft reicht dieser Raum, wie ebenfalls aus Fig. 1 ersichtlich, für eine Weiterbildung dahingehend aus, daß zwischen den Zylinderbohrungen 7 zweier benachbarter Drehschieber 3 ein Massezuführungskanal 12 mit zu den Bohrungen 7 führenden Zweigleitungen 13 angeordnet werden kann, was eine unmittelbare Massezufuhr im Bereich der Drehschieber zwecks dosierter Füllung der Pumpenzylinder ermöglicht. Eine solche ventilblockseitige Massezufuhr ist zwar bekannt bei Füllpumpen, mit denen Näpfchenfelder mit nicht so dichtem Napfbesatz befüllt werden können, im vorliegenden Fall ist es aber besonders vorteilhaft, eine solche ventilblockseitige Massezuführung ebenfalls zur Anwendung bringen zu können. Für die Beschickung der Massezufuhrkanäle 12 erstrecken sich dann im Pumpenblock 16′ senkrechte Zufuhrkanäle 12′ nach oben, von wo aus Verbindungsleitungen (nicht dargestellt) zu einem ebenfalls nicht dargestellten Massevorratsbehälter über der ganzen Füllpumpe führen.

**Patentansprüche**

1. Füllpumpe zum Eindosiezen von flüssigen bis pastösen Produkten, wie Öl, Konfitüre, quark, Joghurt od.dgl. in napfförmige, als ganzes Napffeld taktweise im Strang geförderte, in auf Lücke zueinander versetzten Reihen angeordnete Aufnahmebehälter , bestehend aus mehreren, der Napfanzahl im Napffeld entsprechenden, in Reihe neben-und hintereinander angeordneten, gemeinsam antreibbaren Kolbendosierpumpen (I) mit Schließ- und Öffnungsmechanik in Form eines unter den Kolbendosierpumpen (I) angeordneten Ventilblockes (16), in dem mit einem gemeinsamen Antrieb im Takt drehbare Drehschieber (3) mit Masseführungskanälen (4) angeordnet und diesen jeweils Füllmundstücke (5), zu denen Zwischenkanäle (6) führen, für die Aufnahmebehälter zugeordnet sind,
**dadurch gekennzeichnet ,**
daß unter jeder sich quer zur Napffelddurchlaufrichtung (A) angeordneten Pumpenreihe (1, 1′), die untereinander mit zur Distanz (D) der Füllmundstückreihen (2) doppelter Distanz ($D_1$) angeordnet sind, ein Drehschieber (3) mit den Massedurchlaßkanälen (4) angeordnet ist, wobei die Füllmundstücke (5) der einen Reihe (2) zu denen der jeweils benachbarten Reihen (2) auf Lücke und in bezug auf die mittelsenkrechte Schnittebene (10) des zu den beiden Reihen (2) gehörenden Drehschiebers (3) auf der einen und auf der anderen Seite versetzt zueinander angeordnet und dieser Lücke-und Versatzanordnung entsprechend die Massedurchlaßkanäle (4) im Drehschieber (3) und die Zwischenkanäle (6, 6′),abwechselnd zur einen und anderen Füllmundstücksreihe (2) führend, entsprechend entgegengesetzt geneigt im Ventilblock (16) angeordnet sind.
2. Füllpumpe nach Anspruch 1,
**dadurch gekennzeichnet ,**
daß die Massedurchlaßkanäle (4) im Drehschieber (3) zwischenkanalseitig entsprechend der Neigung der Zwischenkanäle (6, 6′) abgewinkelt zum füllpumpenseitigen Teil der Massedurchlaßkanäle (4) angeordnet sind.
3. Füllpumpe nach Anspruch 1 oder 2,
**dadurch gekennzeichnet ,**
daß zwischen den Zylinderbohrungen (7) zweier benachbarter Drehschieber (3) ein Massezuführungskanal (12) mit zu den Drehschiebern (3) führenden Zweigleitungen (13) angeordnet ist und von den Massedurchlaßkanälen (4) im Drehschieber (3) jeweils ein Masseansaugkanal (14) im wesentlichen quer zu deren Erstreckung abgezweigt angeordnet ist.

**Claims**

1. A loading pump for filling measured quantities of liquid to pastv products, such as oils, marmelades, cottage cheese, yoghurt or the like into cup-shaped receptacles cyclically string-conveyed as an undivided beaker field and arranged in rows disposed in staggered relationship, comprising a plural number of commonly actuable piston-type metering pumps (I) with closing and opening mechanisms in the form of a valve block (16) disposed underneath the piston-type metering pumps (I) corresponding in numher to the number of beakers in the beaker field and disposed in a row in side-by-side and series-arrangement, in which valve block (16) are disposed, with a commom drive, cyclically rotatable slide valves (3) comprising feedstock channels (4) respectively associated to which, for the recepatacles, are filling nozzles (5)to which the intermediate channels (6) lead, characterized in that
disposed below each pump row (1,1′) located crosswise of the beaker field passage direction (A), which pump rows wit/n respect to one another are disposed at a distance ($D_1$) being twice the distance (D) of the filling nozzle rows (2), is a rotary slide valve (3) with the feedstock passageways (4), with the filling nozzles (5) of the one row (2) being disposed with respect those of the respectively adjacent rows (2), in staggered relationship, and with respect to the central vertical sectional plane (10) of the rotary slide valve (3) associated to the two rows (2), on the one and on the other side, being disposed in staggered relationship with respect to one another, and, in accordance with the said arrangement in staggered relationship, the feedstock passageways (4) in the rotary slide valve (3) and the intermediate channels (6,6′) leading alternately to the one and to the other filling nozzle row (2) being disposed the valve block (16) in a manner correspondingly oppositely inclined.

2. A loading pump according to claim 1,
characterized in that
the feedstock passageways (4) in the rotary slide valve (3), at the intermediate channel side, following the inclination of the intermediate channels (6, 6′) are disposed at an angle to the loading pump-sided section of the feedstock passageways (4).

3. A loading pump according to claims 1 or 2,
characterized in that
disposed between the cylindrical bores (7) of two adjacent rotary slide valves (3) is a feedstock supply channel (12) having branch conduits (13) leading to the rotary slide valves (3), and that among the feedstock passageways (4) in the rotary slide valve (3) respectively one feedstock intake channel (14) is branched substantially crosswise of the extension thereof.

## Revendications

1. Pompe de remplissage pour le dosage de produits liquides à pâteux, tels que de l'huile, de la confiture, du fromage blanc, du yaourt ou équivalent, dans des récipients de réception en forme de godets transportés comme champ de godets entier en cadence en rame et disposés en rangées en quinconce les unes par rapport aux autres, se composant de plusieurs pompes de dosage à piston (I), pouvant être commandées ensemble, placées en rangées les unes derrière les unes des autres et les unes à côté les unes des autres, dont le nombre correspond au nombre des godets du champ de godets, avec un mécanisme de fermeture et d'ouverture sous forme d'un bloc de vannes (16) placé sous les pompes de dosage à piston (I) dans lequel sont placées plusieurs vannes rotatives (3) avec des canaux de guidage de la masse (4) qui sont rotatives en cadence avec une commande commune et que des becs de remplissage (5) auxquels mènent des canaux intermédiaires (6) correspondent à chacune de ces vannes,
caractérisée en ce
qu'une vanne rotative (3) avec les canaux de passage de la masse (4) est placée sous chacune des rangées de pompes (1, 1′) placées dans le sens transversal par rapport au sens de passage (A) du champ de godets à une distance (D1) qui est le double de la distance (D) des rangées de becs de remplissage (2), les becs de remplissage (5) de l'une des rangées (2) étant placés en quinconce par rapport aux rangées (2) respectivement voisines et décalés les uns par rapport aux autres de l'un et l'autre côté du plan de coupe de la bissectrice (10) de la vanne rotative (3) qui appartient aux deux rangées (2) et que les canaux de passage de la masse (4) de la vanne rotative (3) sont placés de manière à correspondre à cet arrangement en quinconce et que les canaux intermédiaires (6, 6′), sont placés dans le bloc des vannes (16) en étant inclinés alternativement en sens inverse en menant à l'une et l'autre des rangées de becs de remplissage (2).

2. Pompe de remplissage selon la revendication 1,
caractérisée en ce
que les canaux de passage de la masse (4) sont placés dans la vanne rotative (3) du côté des canaux intermédiaires en étant coudés vers la partie des canaux de passage de la masse (4) qui est du côté de la pompe de remplissage de manière à correspondre à l'inclinaison des canaux intermédiaires (6, 6′).

3. Pompe de remplissage selon la revendication 1 ou 2,
caractérisée en ce
qu'un canal d'amenée de la masse (12) avec des branchements (13) qui mènent aux vannes rotatives (3) est placé entre les forures de cylindre (7) de deux vannes rotatives (3) voisines et qu'un canal d'aspiration de la masse (14) est placé en étant dérivé de chaque canal de passage de la masse (4) de la vanne rotative (3) en étant substantiellement transversal par rapport à leur extension.

Fig.1

Fig.1A

Fig.1B

SCHNITT: A – B

Fig. 2

SCHNITT: C - D

Fig.3